# EUROPÄISCHE PATENTANMELDUNG

(11) **EP 1 839 942 A2**
(43) Veröffentlichungstag der Anmeldung: **03.10.2007**
(21) Anmeldenummer: 07105304.5
(22) Anmeldetag: 30.03.2007
(51) Int. Cl.: B60P 1/43

(54) **Lastfahrzeug-Heck mit Laderampe**

(30) Priorität: 30.03.2006 DE 202006005161 U
(71) Anmelder: Doll Fahrzeugbau GmbH, 77728 Oppenau (DE)
(72) Erfinder: Huber, Michael, 77728 Oppenau (DE); Gerhardt, Rolf, 77740 Bad Peterstal-Griesbach (DE)
(74) Vertreter: Strych, Werner Maximilian Josef

(57) **Zusammenfassung**

Im Heckbereich eines LKW-Aufliegers oder Anhängers sind - besonders für Schwertransporte - häufig Zusatzeinrichtungen wie etwa hochklappbare Auffahrtrampen montiert. Um das Fahrzeug auch für andere Zwecke einsetzen zu können, müssen diese Auffahrtrampen demontierbar sein. Dann standen bisher die am Rahmen heckseitig dafür angeschweißten Befestigungselemente, wie Lageraugen etc. für diese Zusatzeinrichtungen über die eigentliche Endfläche des Rahmens nach hinten vor, was einerseits mit in die Gesamtlänge des Fahrzeuges eingeht und andererseits leicht beim Rangieren beschädigt werden kann. Die Erfindung schafft ein glattes Fahrzeugheck und nutzt die zur Verfügung stehende, vom Gesetzgeber begrenzte Fahrzeuggesamtlänge besser aus.

## Beschreibung

### I. Anwendungsgebiet

Die Erfindung betrifft die Gestaltung der Ladefläche eines Lastfahrzeuges in dessen Heckbereich.

### II. Technischer Hintergrund

Lastfahrzeuge, egal ob Sattelauflieger oder mittels Deichsel gezogene Anhänger, die auch zum Transport von schweren Einzellasten und insbesondere selbst fahrenden Arbeitsmaschinen wie Baggern etc. verwendet werden, benötigen im Heckbereich Zusatzausstattungen:

Leichte Auffahrtrampen können z. B. unter der Ladefläche verstaut werden und vom Fahrer manuell herausgenommen und an einer am Heck des Fahrzeugs befestigte Auflageleiste eingehängt werden.

Schwere Auffahrtrampen sind am Heck des Fahrzeuges montiert und hydraulisch verschwenkbar zwischen einer vertikal nach oben ragenden Transportstellung und einer schräg nach hinten auf den Untergrund abfallenden Ladestellung.

Wenn der Betreiber des Fahrzeuges diese Auffahrtrampen jedoch nicht benötigt, wird er sie demontieren, um auf diese Weise auch langes Ladegut mit Überlänge transportieren zu können, was bei montierten, senkrecht hoch stehenden Auffahrtrampen nicht möglich ist.

Abhängig von der Transportaufgabe sind dabei nicht nur eine, sondern mehrere, verschiedene Arten von schweren Auffahrtrampen verfügbar, die vom Fahrzeugbetreiber je nach Einsatzzweck wechselweise montiert werden, seien es schwenkbare Auffahrtrampen, klappbare Auffahrtrampen, einfache Auffahrtrampen mit Federunterstützung oder Hydraulikunterstützung, in Querrichtung verschiebbare Auffahrtrampen etc..

Auch weitere Zusatzausstattungen am Fahrzeugheck sind manchmal zusätzlich notwendig, insbesondere Stützbeine, die dann meist seitlich am Fahrzeug angeordnet sind, und auch nur zu bestimmten Transportaufgaben benötigt werden.

Bisher waren für die unterschiedlichen Arten von Zusatzausstattungen entsprechende Befestigungsteile, seien es entweder die Auflageleisten für leichte Auffahrtrampen oder die Lagerungsaugen für schwere, kraftunterstützte Auffahrtrampen, am Heck des Lastfahrzeuges, also in der Regel der hinteren Quertraverse des Fahrzeugrahmens, verschweißt.

Dies hatte einerseits zur Folge, dass in der Regel
- nur Befestigungsteile für eine Art von Auffahrtrampe an dem Fahrzeug vorhanden war und dass diese angeschweißten Befestigungselemente mit Bestandteil der vom Gesetzgeber begrenzten Gesamtlänge des Fahrzeuges waren, wodurch sich die eigentliche Ladelänge, also Länge der Ladefläche, reduzierte und
- diese fest angeschweißten Befestigungselemente stehen bei demontierter Auffahrtrampe frei nach hinten ab und können beim Rangieren des Fahrzeuges leicht beschädigt werden, was dann wegen der Verschweißung einen hohen Reparaturaufwand, insbesondere eine lange Stillstandszeit des Fahrzeuges, erfordert.

### III. Darstellung der Erfindung

### a) Technische Aufgabe

Es ist daher die Aufgabe gemäß der Erfindung, ein Fahrzeugheck und dazu passende Befestigungselemente für heckseitige Zusatzteile, insbesondere Auffahrtrampen, zu schaffen, die die zulässige Gesamtlänge des Fahrzeuges optimal nutzen, einen wahlfreien Einsatz der Zusatzeinrichtungen erlauben sowie deren schnelle Montage und Demontage.

### b) Lösung der Aufgabe

Diese Aufgabe wird durch die Merkmale des Anspruchs 1 gelöst. Vorteilhafte Ausführungsformen ergeben sich aus den Unteransprüchen.

Je weniger die im Heckbereich des Lastfahrzeuges, insbesondere an der heckseitigen Quertraverse, angeordneten Befestigungselemente in Längsrichtung nach hinten vorstehen, umso weniger reduzieren sie die nutzbare Gesamtlänge des Fahrzeuges und umso weniger leicht sind Beschädigungen dieser Befestigungselemente möglich.

Dadurch, dass an diesen Befestigungselementen unterschiedliche Zusatzeinrichtungen, beispielsweise unterschiedliche Arten von Auffahrtrampen oder auch ein Ladekran, zur Montage zur Verfügung stehen, deren Gegenelemente jeweils so gestaltet und angeordnet sind, dass sie zu den Befestigungselementen des Fahrzeuges passen, entsteht ein Bausatz, aus dem man sich die gewünschte Kombination zusammenstellt, die auch jederzeit wieder leicht veränderbar ist, da die Befestigungselemente und die Gegenelemente auf einfache Art und Weise lösbar miteinander verbunden werden können.

Dabei können die Befestigungselemente entweder auf der Rückseite der Quertraverse oder auf deren Stirnflächen, also am Fahrzeug seitlich, angeordnet sein, und dementsprechend auch die Zusatzeinrichtungen.

Eine weitere seitlich außen anzuordnende Zusatzeinrichtung ist bei Planenaufbauten eine hintere Rampe, die seitlich und/oder in der Höhe teleskopierbar ist, um bei der Beladung von hinten mehr Raum zu schaffen.

Eine typische Zusatzeinrichtung, die an den Stirnseiten der Quertraverse, also am Fahrzeug seitlich außen überstehend befestigt wird, ist ein Stützbein. Vorzugsweise sind die auf der Stirnseite verwendeten Befestigungselemente artgleich mit denen auf der Heckseite, jedoch in der Regel in anderen Abständen relativ zueinander angeordnet und positioniert als in der Heckseite.

In der Außenseite müssen auch nicht unbedingt separate Anschlüsse für Hydraulik und Elektrik vorhanden sein, sondern die Anschlüsse in der Heckseite können so positioniert werden, dass mittels des gleichen Schlauchsets auch eine Anbindung der Zusatzeinrichtungen an den Stirnseiten der Quertraverse möglich ist.

Als Befestigungselemente kommen alle bekannten, leicht lösbaren Verbindungselemente in Frage, insbesondere im einfachsten Fall eine Gewindebohrung in dem Fahrzeug, also der Quertraverse, vorzugsweise in Form eines Sets mehrerer, z. B. in einer Reihe nebeneinander oder in einem Rechteck angeordneter, Gewindebohrungen, und analog angeordnete Durchgangsbohrungen in der Zusatzeinrichtung, so dass durch Einstecken und Einschrauben von passenden Befestigungsschrauben durch die Durchgangsbohrungen hindurch in der Gewindebohrung eine Fixierung der Zusatzeinrichtung schnell und einfach möglich ist.

Die Zusatzeinrichtung ist meist eine in sich geschlossene Baugruppe aus mehreren Einzelteilen, die auch gegeneinander beweglich sind, und im normalen Betrieb nicht zerlegt wird, sondern im Ganzen am Fahrzeug montiert oder von diesem demontiert wird.

Die Befestigungsgegenelemente sind dabei in einem Teil, dem s. g. Zusatzbasisteil, der Zusatzeinrichtung angeordnet, welches in aller Regel ebenfalls von der Zusatzeinrichtung nicht demontiert wird, vor allem wenn es sich um große und mittels Muskelkraft nicht mehr transportierbare Einheiten wie kraftbetätigte Auffahrtrampen handelt.

Lediglich in Einzelfällen, beispielsweise bei leichten Zusatzeinrichtungen wie einer manuell handhabbaren leichten Auffahrtrampe, ist das am Fahrzeug zu befestigende Zusatzteil separat von dem Rest der Zusatzeinrichtung.

So kann beispielsweise das Basisteil nur eine Auflageleiste für das Auflegen des vorderen Endes einer manuell aufzulegenden leichten Auffahrtsrampe sein. Meist ist in der Auffahrtleiste dann in der Oberseite eine Nut angeordnet, in die eine entsprechende Kröpfung der Auffahrtrampe eingreift zur formschlüssigen Sicherung.

Auch bei kraftunterstützten Auffahrtrampen, die beispielsweise mittels einer Feder oder eines Hubzylinders bewegt werden, greift dieses Kraftelement einerseits an der Rampenplatte und andererseits am Basisteil an, also nicht an einem außerhalb des Basisteiles oder der Zusatzeinrichtung liegenden Fixpunkt des Fahrzeuges.

Auch falls ein z. B. die Rampenplatte in Querrichtung verschiebender Querzylinder vorhanden ist, greift dieser nicht am Fahrzeug direkt an, sondern eben einerseits an dem Basisteil oder einem daran befestigten Fixteil und andererseits an dem zu bewegenden Teil, beispielsweise der Rampenplatte oder einem damit verbundenen Teil.

Damit die Zusatzeinrichtungen mit den notwendigen Energieformen, beispielsweise Elektrik und Hydraulik, versorgt werden können, sind in der Nähe der Sets von Befestigungselementen Anschlüsse für die verschiedenen Energieformen vorgesehen und natürlich so positioniert, dass sie die unterschiedlichen montierbaren Zusatzeinrichtungen nicht stören. Dementsprechend umfasst der Bausatz vorzugsweise auch ein Set von Leitungen, mit deren Hilfe die Zusatzeinrichtung nach der Montage mit diesen Anschlüssen verbunden wird.

Ebenso kann der Bausatz nicht nur eine, sondern mehrere unterschiedliche Quertraversen für das Heck umfassen, insbesondere unterschiedlich hohe Hecktraversen, entsprechend der verschiedenen, an der Hecktraverse anzusetzenden, unterschiedlichen hohen Profile von verwendeten Längsträgern.

Des weiteren kann der Bausatz Warneinrichtungen umfassen, die ebenfalls an der Hecktraverse, aber nicht an den erwähnten Befestigungselementen sondern anderweitig befestigt werden.

So kann der Bausatz beispielsweise eine Überbreite-Warnvorrichtung umfassen in Form eines auf der Vorderseite der Quertraverse in entsprechenden Lagerböcken querverschiebbar gelagerten Stabes, an dessen äußeren Ende sich eine größere Warntafel befindet.

Diese Warnvorrichtung wird bei einem überbreiten Ladegut soweit seitlich ausgefahren, wie es dem Überhang des Ladegutes entspricht, und in dieser Stellung fixiert.

Als Befestigungselemente kommen auch Einhängeösen am Fahrzeug in Frage, in die passende, z. B. mit verdicktem Ende ausgestattete, Zapfen, die am Zusatzteil ausgebildet sind, eingehängt und zusätzlich gesichert werden können, jedoch hat die banale Verschraubung den Vorteil, dass dabei das eigentliche Befestigungsteil, nämlich die Befestigungsschraube, zum einen ein Standardteil und zum anderen ein separates, nicht an der Zusatzeinrichtung befestigtes, Teil ist und daher bei Beschädigung leicht ausgetauscht werden kann, was bei derartigen Befestigungselementen grundsätzlich vorzuziehen ist.

Die Basisteile erstrecken sich in der Regel über ein Set von Befestigungselementen, wovon zumindest im linken und rechten Seitenbereich des Fahrzeughecks jeweils ein Set angeordnet ist, ggf. auch noch im mittleren Bereich, um auch dort eine Zusatzeinrichtung anordnen zu können.

Darüber hinaus kann der Bausatz auch Zusatzeinrichtungen umfassen, die über mehrere Sets von Befestigungselemente, insbesondere die gesamte Fahrzeugbreite durchgehen:

Beispielsweise eine Auffahrtrampe, deren einzige Rampenplatte über die ganze Breite des Fahrzeugs durchgeht.

Oder ein Ladebalken, der quer hinter dem Heck, also der Quertraverse verläuft, und Container-Verriegelungen (Twist-Locks), vor allem für 40" Container aufweitend für den Einsatz relativ zur Quertraverse nach hinten teleskopierbar ist.

Ferner können mehrere Sets von Befestigungseinrichtungen auch übereinander am Fahrzeug angeordnet werden, um Zusatzeinrichtungen in unterschiedlichen Höhen am Fahrzeug befestigen zu können.

Im Idealfall weist das Heck des Fahrzeuges, also insbesondere die Quertraverse des Fahrzeugrahmens, somit eine Rückseite auf, aus der keine Elemente nach hinten vorstehen, und insbesondere eine ebene, beispielsweise vertikal stehende Rückseite, in der höchstens Vertiefungen, aber keine Vorsprünge angeordnet sind.

So befindet sich vorzugsweise im unteren Bereich der Quertraverse vorzugsweise eine Rinne, um darin geschützt empfindliche Elemente wie Rücklichter, die Anschlüsse für Elektrik und Hydraulik, die Kennzeichenbeleuchtung und Ähnliches unterzubringen.

Des weiteren kann die Quertraverse Durchbrüche, vorzugsweise mehrere einzelne Durchbrüche nebeneinander, insbesondere in der Oberkante der Quertraverse, aufweisen, die zum Einstecken eines Schiebehebels und damit als Fixpunkt dienen, um mit Hilfe des Schiebehebels manuell die Rampenplatte in Querrichtung entlang des Lagerbolzens zu verschieben, die ein erhebliches Gewicht aufweisen kann.

Auch bei der Montage und Demontage der gesamten Zusatzeinrichtung wie einer Auffahrtrampe ist dies wegen des Gewichts von meist mehreren Zentnern nur mit Hilfsmitteln wie einem Kran oder Gabelstapler möglich.

Um dabei das Positionieren, beispielsweise für das Einschrauben der Befestigungsschrauben in das Fahrzeugheck, zu erleichtern, kann zusätzlich eine Positionierhilfsvorrichtung am Heck, insbesondere der Quertraverse, einerseits und dem Basisteil der Zusatzeinrichtung andererseits vorhanden sein:

Dies können aus dem Basisteil vorstehende Einhängehaken, beispielsweise zum Einhängen in die Durchbrüche von der Oberkante der Quertraverse sein, oder aus dem Basisteil in Richtung Quertraverse vorstehende, vorzugsweise konische, Positionierzapfen, die dann allerdings einen größeren Durchmesser als die Befestigungsschrauben aufweisen sollten, und in der Quertraverse angeordnete entsprechende Aufnahmen, wobei nicht unbedingt beide Elemente sondern entweder die Aufnahmen oder die Zapfen konisch ausgebildet werden sollten.

Auch linienförmige Vorsprünge im Baisteil und entsprechende Schlitze in der Quertraverse sind günstig verwendbar.

### c) Ausführungsbeispiele

Ausführungsformen gemäß der Erfindung sind im Folgenden beispielhaft näher beschrieben. Es zeigen:
- Fig.1:: Ein Heck mit zwei montierten hydraulikbetätigten Einfach-Auffahrtrampen;
- Fig. 2:: ein Fahrzeugheck mit mehreren verschiedenen montierten Zusatzeinrichtungen in perspektivischer Ansicht;
- Fig. 3a,b,c:: die Variante der Fig. 2 in Heckansicht und Seitenansichten; und
- Fig. 4:: ein fast leeres Fahrzeugheck.

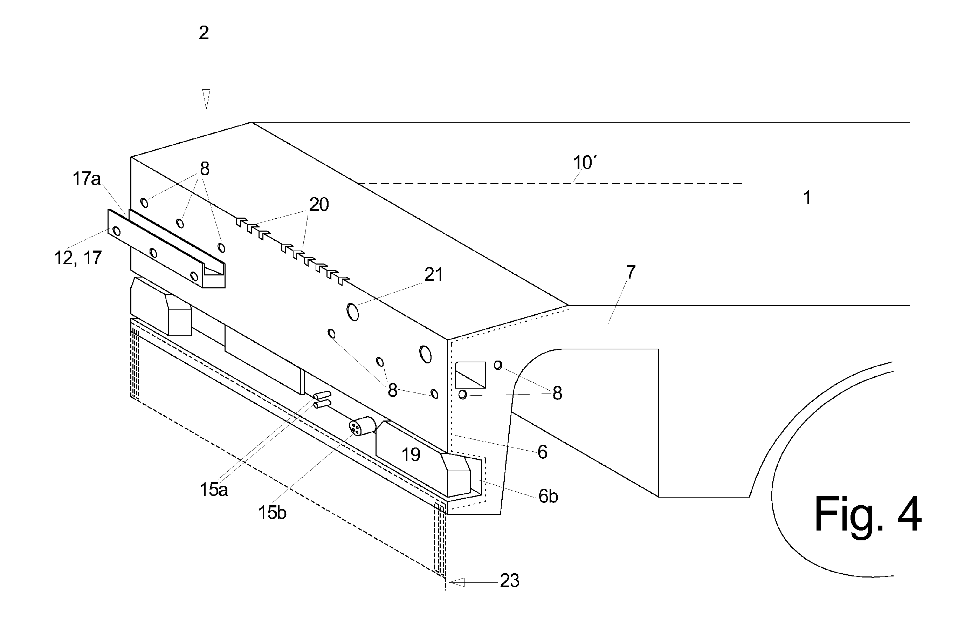

Zunächst zeigt Fig. 4 einen fast leeren Heckbereich 2 eines Lastfahrzeuges 1, sei es eines Sattelaufliegers oder eines Anhängers, woraus die Vorzüge der erfindungsgemäßen Lösung ersichtlich sind:

Wesentlich ist dabei auch, dass die in Längsrichtung 10 zu messende, vom Gesetzgeber vorgegebene zulässige Gesamtlänge 23 des Fahrzeuges 1 bei heckseitigen Anbauteilen nur bis zum hinteren Ende der Quertraverse 6 gemessen wird, also alle montierbar und demontierbar danach dort befestigten Zusatzeinrichtungen, wie etwa die Auffahrtrampen 3 und 4 dann nicht zur Gesamtfahrzeuglänge zählen, sofern sie nicht daran fest angeordnet, etwa verschweißt sind, was bei bisherigen Lösungen zumindest für die Klemmböcke des Lagerbolzens der Fall war, die auch bereits eine Auskragung in Längsrichtung von 10-20 cm aufwiesen, und um welche dadurch die Länge des Fahrzeuges reduziert wurde.

Anhand der rechten Seite der Quertraverse 6 im Heckbereich, an die sich der nach vorn verlaufende Rahmen 7 anschließt, der damit verschweißt ist, werden die Vorteile offensichtlich:

Die Quertraverse 6 verfügt über eine ebene, vertikale Rückseite 6a, aus der keinerlei vorspringende Teile nach hinten abragen, wenn keine Zusatzeinrichtungen montiert sind.

In der Rückseite 6a befinden sich lediglich Vertiefungen, einerseits in Form der Gewindebohrungen 8, von denen rechts und links in der Quertraverse 6 je drei Stück auf gleicher Höhe als Befestigungselemente für die Zusatzeinrichtungen vorhanden sind, und die darunter befindliche, in Querrichtung verlaufende Rinne 6b, die zur geschützten, aus der Rinne 6b nach hinten nicht vorstehenden, Montage von Rücklichtern 19 und Anschlüssen 15a, 15b für Hydraulik und Elektrik dient.

Die Gewindebohrungen 8 sind meist Durchgangsbohrungen durch das Profil der Quertraverse 6, um die Herstellung zu verbilligen und das Zusetzen durch Verunreinigungen zu erschweren.

An dem auf der linken Seite ebenfalls, mittensymmetrisch zur Längsmitte 10' des Fahrzeugs, vorhandenen Gewindebohrungen 8 ist bereits eine einfache Auflageleiste 17 als Zusatzbasisteil 12 verschraubt, wie sie zum manuellen Auflegen einer leichten Auffahrtrampe 3 dient, die ansonsten unter der Ladefläche verstaut ist und vom Fahrer manuell dort entnommen und auf der Auflageleiste 17 aufgelegt wird.

Zu diesem Zweck weist diese Auflageleiste 17 auf ihrer Oberseite eine Nut 17a auf, in die eine entsprechende Kröpfung 3a der losen Auffahrtrampe 3 zur formschlüssigen Sicherung eingreift, wie die Fig. 4 im rechten Teil erkennen lässt.

In dem in Fahrtrichtung 10 betrachtet linken Bereich ist oberhalb des Sets, an dem die Auflageleiste 17 bereits montiert ist, in der Höhe darüber versetzt ein weiteres Set von Gewindebohrungen 8 dargestellt, um Zusatzeinrichtungen wie etwa die Auflageleiste 17 auf unterschiedlichen Höhe am Fahrzeug 1 montieren zu können.

Des Weiteren sind an der Oberkante der Rückseite 6a der Quertraverse 6 nebeneinander eine Reihe von Durchbrüchen 20, angeordnet vorzugsweise eher im mittleren Bereich, zu erkennen, deren Funktion später erläutert wird.

Auf den Seiten des Heckbereichs sind zusätzlich ebenfalls Gewindebohrungen 8 dargestellt, an denen Zusatzeinrichtungen verschraubt werden können, die seitlich an den Heckbereich 2 angesetzt werden.

In der rechten Hälfte des Hecks sind weiterhin als Positionierhilfsvorrichtungen 21 nebeneinander zwei Vertiefungen, insbesondere Durchbrüche zu erkennen, die zur Aufnahme von an den aufzunehmenden Basisteilen vorhandenen, in Richtung auf die Quertraverse 6 vorstehenden entsprechenden Positionierzapfen 22 (nicht dargestellt) dienen.

In dem diese nicht dargestellten Positionierzapfen 22 und/oder die Vertiefungen 21 im Durchmesser deutlich größer als die Gewindebohrungen 8 und in axialer Richtung konisch ausgebildet sind, kann beim Heranbringen der meist mehrere 100 kg schweren Auffahrtrampen durch Einschieben der beiden Zapfen 22 in die Vertiefungen 21 eine einfache Grobpositionierung vorgenommen werden, und im Anschluss daran die Fixierung durch Einschrauben von Halteschrauben durch das Basisteil 12 hindurch in die Gewinde der Gewindebohrungen 8 erfolgen.

Auch andere Positionierhilfsvorrichtungen wie Schlüssellochöffnungen mit einrastbaren pilzförmigen Zapfen und ähnliches sind denkbar.

An einem leeren Heck wie in Fig. 4 in der rechten Hälfte dargestellt, können daher wahlweise unterschiedliche Zusatzeinrichtungen, beispielsweise unterschiedliche Arten von Auffahrtrampen, befestigt werden:

Die Fig. 4, linke Hälfte, zeigt ja bereits eine Auflageleiste 17 als Basisteil 12' einer Zusatzeinrichtung, die allerdings vom Rest der Zusatzeinrichtung normalerweise getrennt ist und nur bei Benutzung in Wirkverbindung mit dieser gebracht wird durch Auflegen der losen Auffahrtrampe 3 auf die Auflageleiste 17, wie in Fig. 4 rechte Hälfte (in Fahrtrichtung gesehen) dargestellt.

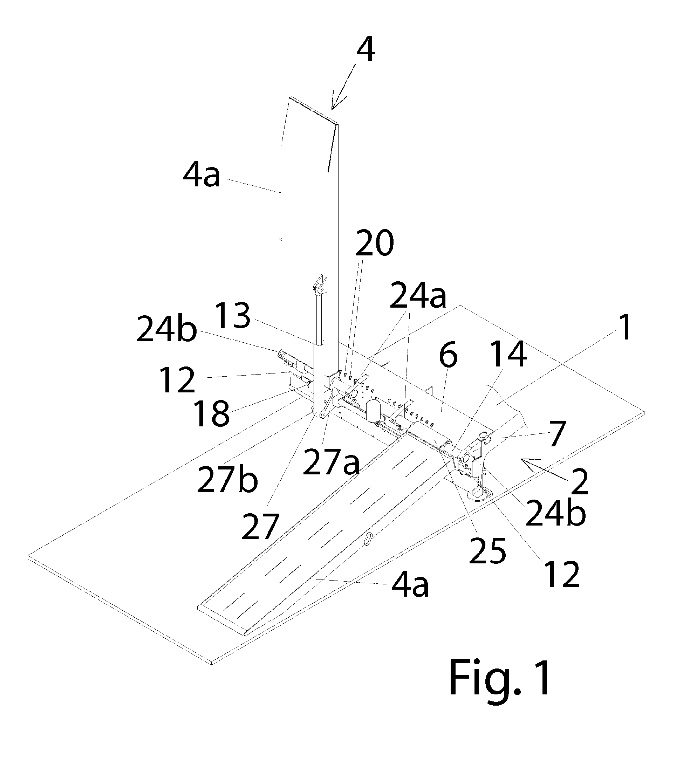

Der häufigere Fall der Verwendung von schweren, kraftunterstützten Auffahrtrampen 4, und zwar auf beiden Fahrzeugseiten der jeweils gleichen Auffahrtrampe 4, ist perspektivisch in Fig. 1 dargestellt, in der die linke Rampenplatte 4a in Transportstellung hochgeklappt und die rechte Rampenplatte 4a auf den Untergrund aufliegend herabgeklappt dargestellt ist:

Der wesentliche Unterschied zu der Auflageleiste 17 besteht darin, dass eine Auffahrtrampe 4 zusammen mit allen ihren Anbauteile eine komplett vormontierte und handhabbare Baugruppe bildet, die auch das Basisteil 12 umfasst, welches - außer bei Beschädigungen und Reparaturen - nie vom Rest der Auffahrtrampe über der Rampenplatte 4a getrennt wird:

Wie am besten die rechte Hälfte in Fig. 1, aber auch die linke Hälfte der Fig. 4 bei der Rampenbaugruppe zeigt, geht das leistenförmige Basisteil 12 in Querrichtung mindestens über die Breite des dafür vorgesehenen Sets an Befestigungselementen, nämlich den drei Gewindebohrungen 8, durch, in der sich in den analogen Abständen wie den Gewindebohrungen 8 die Durchgangsbohrungen 9 im Bauteil 12 der Baugruppe zum Durchschieben der Befestigungsschrauben befinden.

Am linken und rechten Ende des Basisteils 12 sind plattenförmige Klemmböcke 24 mit diesem fest verbunden, insbesondere verschweißt, deren Plattenebene in Fahrtrichtung verlaufend vertikal steht und von dem Basisteil 12 im montierten Zustand etwa bis zu Oberkante der Quertraverse 6 hinaufreicht.

In den beiden Klemmböcken 24 sind zueinander fluchtende Bohrungen vorhanden, in die sich die beiden Endes des dazwischen verlaufenden Lagerbolzens 14 erstrecken, auf dem das Lagerauge 25, welches am Ende des Rampenplatte 4a angeschweißt ist, verschwenkbar und meist auch in Querrichtung verschiebbar ist zusammen mit der Rampenplatte 4a.

Insbesondere im oberen Bereich der Kontaktfläche dieser Klemmböcke 24a, b zur Rückseite 6a der Quertraverse 6 können Positionierhilfsvorrichtungen vorgesehen sein, beispielsweise vorstehende Zapfen oder Haken zum Einhängen in beispielsweise die Durchbrüche 20 an der Oberkante der Quertraverse, obwohl diese Durchbrüche primär einem anderen Zweck dienen:

Wie Fig. 1 vor allem in der rechten Hälfte erkennen lässt, ist das dort einzige Lagerauge 25 der Rampenplatte 4a schmaler als die freie Querstrecke zwischen den Klemmböcken 24a, b, so dass - beispielsweise entsprechend der Spurbreite eines auf das Lastfahrzeug 1 aufzufahrenden Baggers oder Radlagers - die Rampenplatte 4a entlang des Lagerbolzens 14 in Querrichtung verschiebbar ist.

Abhängig von Größe und Gewicht erfolgt dies entweder automatisch und kraftunterstützt mittels eines in Querrichtung wirkenden Querzylinders 18, der mit seinem einen Ende an den Auslegern 25a, b des Lagerauges 25 und mit dem anderen Ende an dem Basisteil 12 befestigt ist und damit ebenfalls Bestandteil der vormontierten Laderampen-Baugruppe 4 ist.

Bei etwas leichteren Auffahrtrampen oder technisch einfacheren Lösungen wird diese Querverschiebung manuell vom Bediener durchgeführt, was mit einfacher Handkraft meist jedoch nicht möglich ist:

Zu diesem Zweck steckt der Bediener als Hebelübersetzung eine Stange mit der Spitze in einen der Durchbrüche 20, und legt die Stange an z. B. an der in Transportstellung hochragenden Rampenplatte 4a selbst an und hebelt damit die Rampenplatte 4a entlang des Lagerbolzens 14 etwas zur Seite in die gewünschte Sollstellung.

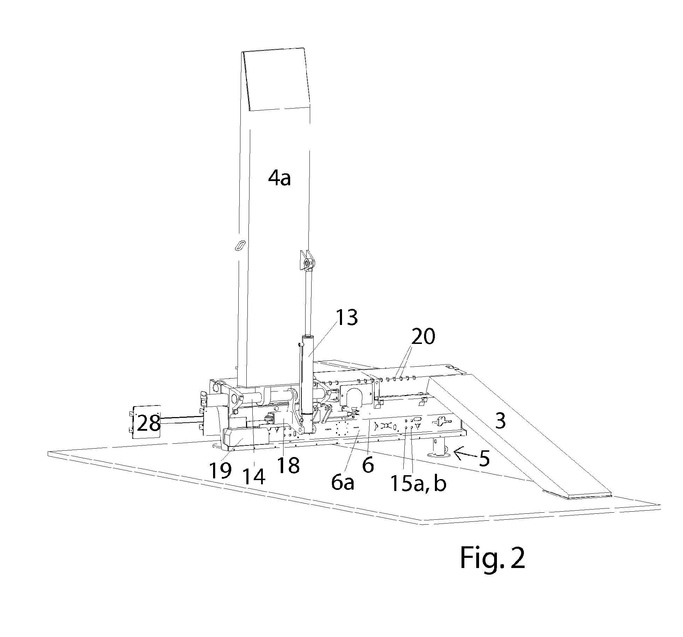

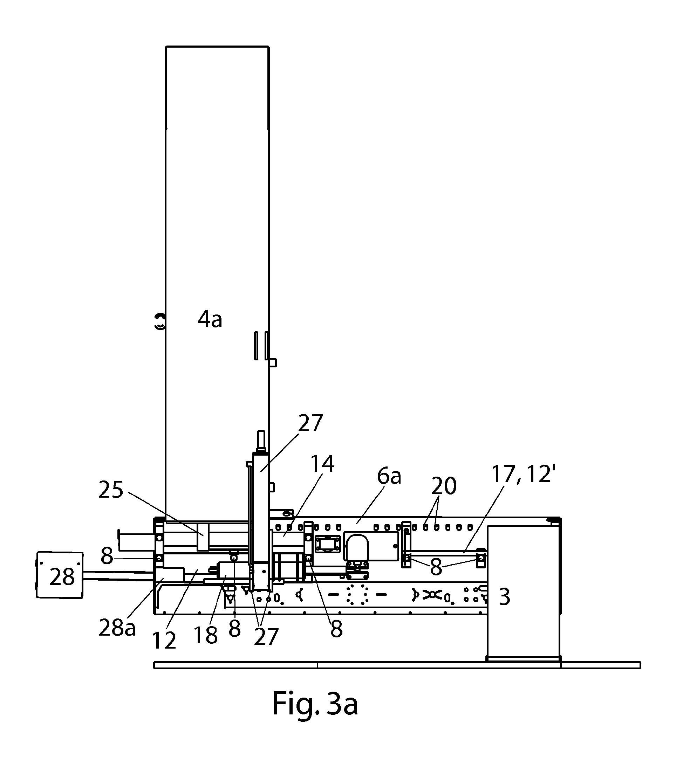

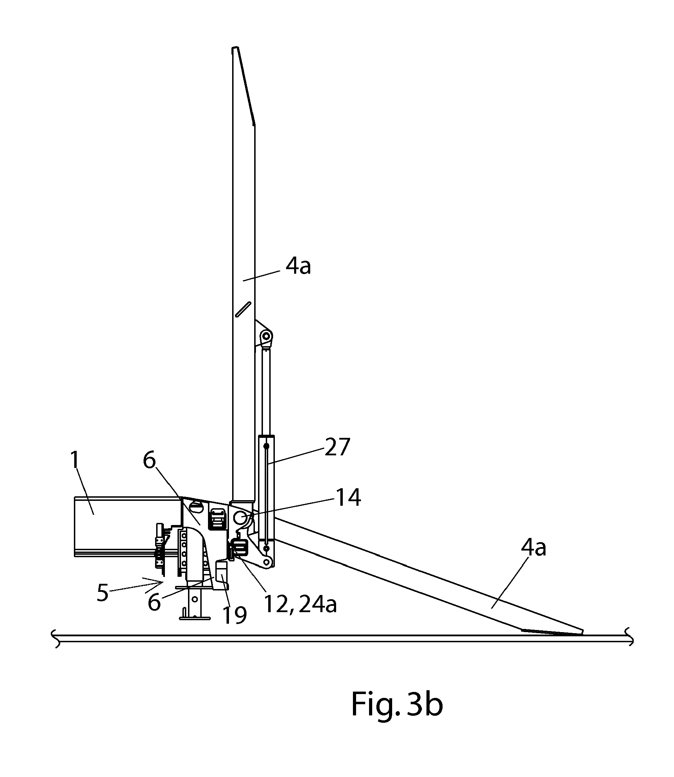

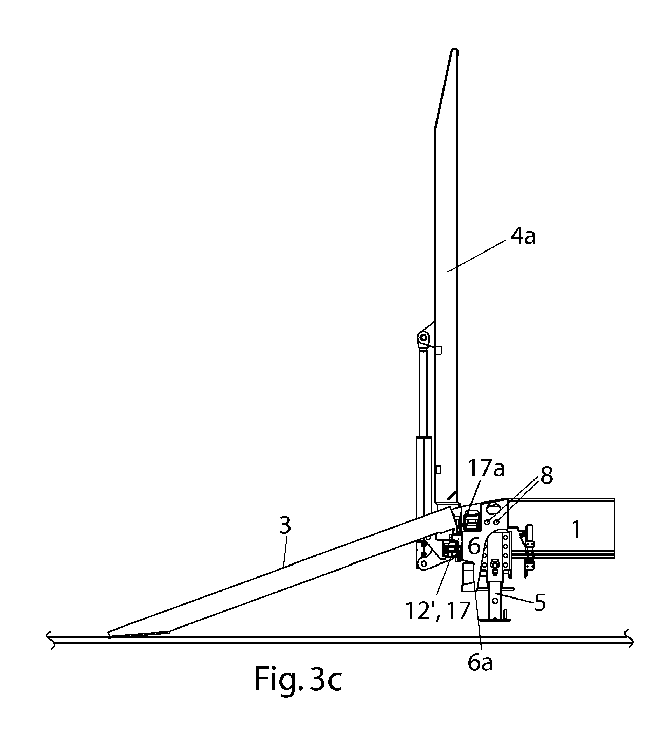

Wie Fig. 2, 3 in der linken Bildhälfte zeigt, kann der Querzylinder 18 auch statt an dem Lagerauge 25 der Rampenplatte 4a an den Auslegern 26a, b für den Hubzylinder 27 der Rampenplatte 4a angreifen, die ebenfalls zusammen mit der Rampenplatte entlang des Lagerbolzens 14 verschiebbar sind. Gleiches gilt auch für die Heckansicht der Fig. 3a.

In der Seitenansicht der Fig. 3b dieser Lösung ist ferner als weitere Zusatzeinrichtung ein Stützfuß 5 zu erkennen, der hydraulisch gegenüber dem Untergrund ausfahrbar ist nach Verschraubung an den seitlichen Befestigungselementen, beispielsweise den in den Seitenflächen des Heckbereiches der Fig. 4 dargestellten Gewindebohrungen 8.

Fig. 3 soll lediglich die Variabilität des erfindungsgemäßen Bausatzes zeigen, während in der Praxis wohl kaum auf der linken und rechten Seite am Heck des Lastfahrzeuges gleichzeitig unterschiedliche Rampen und vor allem unterschiedlich stark belastbare Rampen, nämlich im einen Fall eine lose manuell aufgelegte Rampe 3 (rechts) und im anderen Fall eine hydraulisch betätigte schwere Rampe 4 (links) angeordnet sein.

Fig. 2 und 3a zeigen darüber hinaus als weiteren Bestandteil des Bausatzes eine Breitenwarnvorrichtung 28, die relativ zur Quertraverse 6 in Querrichtung aus dieser zur Seite vorstehend ausgefahren werden kann, weshalb am freien Ende der leistenförmigen Warnvorrichtung ein Warntafel 28a angeordnet ist. Die Breitenwarnvorrichtung 28 wird seitlich so weit vorstehend ausgefahren und fixiert, wie es der Überbreite des nicht dargestellten, auf dem Lastfahrzeug transportierten, Ladegutes entspricht.

Die Breitenwarnvorrichtung 28 ist in der Regel auf der Vorderseite der Quertraverse 6 querverschiebbar gelagert, so dass sie im eingeschobenen Zustand von hinten nicht sichtbar und geschützt ist, und wird manuell auf das gewünschte Maß seitlich herausgezogen und fixiert. Eine solche Warnvorrichtung ist für die rechte Seite in der Heckansicht der Fig. 2a ersichtlich und geführt in Führungsböcken 28a, b, mit denen die Führung entlang der Quertraverse 6 erfolgt.

Fig. 2 und 4 zeigen ferner die in der Rinne 6a der heckseitigen Quertraverse 6 geschützt angeordneten Anschlüsse 15a, b sowie die Rücklichter 19.

### BEZUGSZEICHENLISTE

- 1: Lastfahrzeug
- 2: Heckbereich
- 3: lose Auffahrtrampe
- 3a: Kröpfung
- 4: kraftunterstützte Auffahrtrampe
- 4a: Rampenplatte
- 5: Stützfuß
- 6: Quertraverse
- 6a: Rückseite
- 6b: Rinne
- 7: Rahmen
- 8: Gewindebohrung
- 9: Durchgangsbohrung
- 10: Längsrichtung
- 11: Querrichtung
- 12,12': Zusatzbasisteil
- 13: Hubzylinder
- 14: Lagerbolzen
- 15a,b: Anschluss
- 16: Leitungsset
- 16a,b: Leitungen
- 17: Auflageleiste
- 17a: Nut
- 18: Querzylinder
- 19: Rücklicht
- 20: Durchbruch
- 21: Positionierhilfsvorrichtung
- 22: Positionierzapfen
- 23: zulässige Gesamtlänge
- 24a,b: Klemmbock
- 25: Lagerauge
- 25a,b: Ausleger
- 26a,b: Ausleger
- 27:
- 28: Breitenwarnvorrichtung
- 28a: Warntafel
- 28b: Führungsbock

## Patentansprüche

1. Bausatz für ein Lastfahrzeug (1), bei dem im Heckbereich (2) Zusatzeinrichtungen, insbesondere Auffahrtrampen (3, 4) anordenbar sind, indem im Heckbereich Befestigungselemente für die Zusatzeinrichtungen vorhanden sind,
**dadurch gekennzeichnet, dass**
o die Befestigungselemente in Längsrichtung (10) möglichst wenig, insbesondere gar nicht, nach hinten vorstehen;
o der Bausatz mehrere verschiedene Zusatzeinrichtungen (4, 5) umfasst, die jeweils zu den Befestigungselementen passende Gegenelemente aufweisen; und
o Befestigungselemente und Gegenelemente einfach lösbar miteinander verbindbar sind.

2. Bausatz nach Anspruch 1,
**dadurch gekennzeichnet, dass**
die Befestigungselemente an der heckseitigen Quertraverse (6) des Fahrzeugrahmens (7) angeordnet sind.

3. Bausatz nach einem der vorhergehenden Ansprüche,
**dadurch gekennzeichnet, dass**
- die Befestigungselemente Gewindebohrungen (8) sind und die Gegenelemente Durchgangsbohrungen (9), oder
- die Gegenelemente, insbesondere die Durchgangsbohrungen (9), an einem Zusatzbasisteil (12) der Zusatzeinrichtung angeordnet sind, welches den gesamten Rest der Zusatzeinrichtung trägt.

4. Bausatz nach einem der vorhergehenden Ansprüche,
**dadurch gekennzeichnet, dass**
in jedem Seitenbereich des Lastfahrzeuges, insbesondere der Quertraverse (6) jeweils ein Satz von Befestigungselementen vorhanden ist, und insbesondere auch im mittleren Bereich.

5. Bausatz nach einem der vorhergehenden Ansprüche,
**dadurch gekennzeichnet, dass**
mehrere Sets von Befestigungselementen auf unterschiedlichen Höhen am Lastfahrzeug (1) angeordnet sind.

6. Bausatz nach einem der vorhergehenden Ansprüche,
**dadurch gekennzeichnet, dass**
- das Zusatzbasisteil (12') separat und nicht fest mit der Zusatzeinrichtung verbunden ist, und insbesondere eine Auflageleiste (17) zum Aufliegen loser Auffahrtrampen (3) ist, und insbesondere
- die Auflageleiste (17) eine in Querrichtung verlaufende Nut (17a) auf der Oberseite aufweist und die lose Auffahrtrampe (3) an ihrem vorderen Ende eine in die Nut (17a) passende Kröpfung (3a).

7. Bausatz nach einem der vorhergehenden Ansprüche,
**dadurch gekennzeichnet, dass**
Befestigungselemente und Gegenelemente jeweils im gleichen Querabstand zueinander angeordnet sind.

8. Bausatz nach einem der vorhergehenden Ansprüche,
**dadurch gekennzeichnet, dass**
bei einer kraftunterstützten Auffahrtrampe (4) am Basisteil (12a) die Kraftunterstützung, insbesondere der Hubzylinder (13), angreift und den Lagerbolzen (14) aufnimmt, auf dem die Rampenplatte (4a) schwenkbar gelagert ist.

9. Bausatz nach einem der vorhergehenden Ansprüche,
**dadurch gekennzeichnet, dass**
der Bausatz ein Leitungsset (16) mit hydraulischen (16a) und elektrischen (16b) Leitungen umfasst, dessen Länge so bemessen ist, dass mit Hilfe des Leitungssets von den Anschlüssen (15a) eine Verbindung zu der an einem benachbarten Set von Befestigungselementen befestigten Zusatzeinrichtung hergestellt werden kann.

10. Bausatz nach einem der vorhergehenden Ansprüche,
**dadurch gekennzeichnet, dass**
die kraftunterstützte Auffahrtrampe (4) eine federunterstützte Auffahrtrampe, eine hydraulikunterstützte Auffahrtrampe, eine Klapprampe, eine schwenkbare Rampe, eine querverschiebbare Rampe oder ein Ladekran ist.

11. Bausatz nach einem der vorhergehenden Ansprüche,
**dadurch gekennzeichnet, dass**
der Bausatz heckseitig montierbare Warneinrichtungen für den nachfolgenden Verkehr oder seitlich aus der Quertraverse ausfahrbare und fixierbare Überbreite-Warnvorrichtungen umfasst.

12. Bausatz nach einem der vorhergehenden Ansprüche,
**dadurch gekennzeichnet, dass**
sich eine Zusatzeinrichtung im Wesentlichen über die gesamte Fahrzeugbreite erstreckt und an mehreren Sets von Befestigungselementen nebeneinander gleichzeitig befestigt wird, und die durchgehende Zusatzeinrichtung insbesondere eine breite Einzelrampe ist.

13. Bausatz nach einem der vorhergehenden Ansprüche,
**dadurch gekennzeichnet, dass**
bei querverschiebbaren Zusatzeinrichtungen im Falle des Vorhandenseins eines Querzylinders (18) auch dieser Querzylinder (18) an dem Basisteil (12) und dem beweglichen Teil der Zusatzeinrichtung angreift.

14. Bausatz nach einem der vorhergehenden Ansprüche,
**dadurch gekennzeichnet, dass**
- die Quertraverse (6) eine plane, insbesondere vertikale, Rückseite (6a) ohne nennenswerte Vorsprünge nach hinten aufweist, oder
- die Quertraverse (6) in ihrem unteren Bereich eine in Querrichtung verlaufende Rinne (6b) aufweist, in der Elemente wie die Anschlüsse (15a, b), Rücklichter (19) und/oder die Kennzeichenbeleuchtung geschützt untergebracht sind, indem diese Elemente insbesondere nicht nach außen aus der Rinne (6b) vorstehen.

15. Bausatz nach einem der vorhergehenden Ansprüche,
**dadurch gekennzeichnet, dass**
in der Quertraverse (6), insbesondere in deren Oberkante, Durchbrüche (20) mehrfach, insbesondere regelmäßig, angeordnet sind, die dem Einstecken eines Schiebehebels zum manuellen Querverschieben z. B. einer Rampenplatte (4a) entlang des Lagerbolzens (14) in Querrichtung (11) ermöglicht.

16. Bausatz nach einem der vorhergehenden Ansprüche,
**dadurch gekennzeichnet, dass**
im Heckbereich am Lastfahrzeug an den Außenseiten, insbesondere den Stirnflächen der Quertraverse (6), Befestigungselemente zum Aufnehmen von seitlichen Zusatzeinrichtungen, insbesondere Stützfüßen (5), vorhanden sind.

17. Bausatz nach einem der vorhergehenden Ansprüche,
**dadurch gekennzeichnet, dass**
die Befestigungselemente auf den Außenseiten artgleich zu den Befestigungselementen auf der Rückseite sind, innerhalb eines Sets von Befestigungselementen jedoch andere Abstände in vertikaler und/oder horizontaler Richtung bei den Sets auf der Außenseite und denen auf der Heckseite vorliegen.

18. Bausatz nach einem der vorhergehenden Ansprüche,
**dadurch gekennzeichnet, dass**
nahe an den seitlichen Befestigungselementen Anschlüsse (15a, b) für Hydraulik und Elektrik vorhanden sind und insbesondere hierfür die auf der Rückseite vorhandenen Anschlüsse mitgenutzt werden.

19. Bausatz nach einem der vorhergehenden Ansprüche,
**dadurch gekennzeichnet, dass**
im Heckbereich des Lastfahrzeuges, insbesondere in der Quertraverse (6) einerseits und den Basisteilen (12) andererseits zueinander passende Teile einer Positionierhilfsvorrichtung (21) vorhanden sind.

20. Bausatz nach einem der vorhergehenden Ansprüche,
**dadurch gekennzeichnet, dass**
Die Positionierhilfsvorrichtung eine korrekte Grobpositionierung des Basisteiles (12) an der Quertraverse (6) vor deren Fixierung auf einfache und schnelle Weise ermöglicht, und insbesondere zu diesem Zweck an dem Basisteil (12) in Richtung auf die Quertraverse vorstehende und in diese eindringende Positionierzapfen (22), insbesondere mit konischer Form, vorhanden sind.

21. Bausatz nach einem der vorhergehenden Ansprüche,
**dadurch gekennzeichnet, dass**
der Bausatz verschiedene, insbesondere unterschiedlich hohe, Quertraversen (6, 6', 6") umfasst entsprechend der Höhe der anzuschließenden Längsträger.
